# EUROPÄISCHE PATENTANMELDUNG

(11) **EP 4 119 898 A1**
(43) Veröffentlichungstag der Anmeldung: **18.01.2023**
(21) Anmeldenummer: 22183335.3
(22) Anmeldetag: 06.07.2022
(51) Int. Cl.: G01C 21/20, G01C 21/30

(54) **SELBSTLOKALISIERUNG EINES FAHRZEUGS IN EINER PARKINFRASTRUKTUR**

(30) Priorität: 09.07.2021 DE 102021117741
(71) Anmelder: VOLKSWAGEN AG, 38440 Wolfsburg (DE); CARIAD SE, 38440 Wolfsburg (DE)
(72) Erfinder: HOLICKI, Dr. Michael, 13505 Berlin (DE); HÄNSEL, Ralph, 12437 Berlin (DE); IKEN, Timo, 38440 Wolfsburg (DE); KUBE, Dr. Roland, 38179 Schwülper (DE); LAST, Dr. Carolin, 38102 Braunschweig (DE); WAPPLER, Dr. Stefan, 10717 Berlin (DE); JÖRDENS, Christian, 38126 Braunschweig (DE)
(74) Vertreter: Hofstetter, Schurack & Partner

(57) **Zusammenfassung**

Gemäß einem Verfahren zur Selbstlokalisierung eines Fahrzeugs (2) wird eine erste Pose des Fahrzeugs (2) bestimmt. Mittels einer Umfeldsensoreinrichtung (4a, 4b) werden Umfeldsensordaten erzeugt und basierend darauf wird eine Landmarke (6a, 6b, 6c, 6d, 7, 7, 9a, 9d, 9c) in der Umgebung detektiert. Eine Position der Landmarke (6a, 6b, 6c, 6d, 7, 7, 9a, 9d, 9c) wird bestimmt und abhängig davon wird eine zweite Pose des Fahrzeugs (2) bestimmt. Eine gespeicherte Zuordnungsvorschrift, welche der ersten Pose wenigstens einen bevorzugten Sensortyp oder wenigstens einen vorherrschenden Landmarkentyp zuordnet, wird gelesen und abhängig davon wird ein erster Teil der Umfeldsensordaten ausgewählt, der mittels eines gemäß einem ersten Sensortyp ausgebildeten ersten Umfeldsensorsystems (4a, 4b) der Umfeldsensoreinrichtung (4a, 4b) erzeugt wurde. Zum Detektieren der Landmarke (6a, 6b, 6c, 6d, 7, 7, 9a, 9d, 9c) wird ein erster Landmarkendetektionsalgorithmus auf den ersten Teil der Umfeldsensordaten angewendet wird.

## Beschreibung

Die Erfindung betrifft ein Verfahren zur Selbstlokalisierung eines Fahrzeugs in einer Parkinfrastruktur, wobei eine erste Pose des Fahrzeugs in einem Kartenkoordinatensystem einer auf einem Speichermedium gespeicherten digitalen Karte bestimmt wird, mittels einer Umfeldsensoreinrichtung des Fahrzeugs Umfeldsensordaten erzeugt werden, die eine Umgebung des Fahrzeugs darstellen, basierend auf den Umfeldsensordaten eine Landmarke in der Umgebung detektiert wird und eine Position der Landmarke in dem Kartenkoordinatensystem bestimmt wird und eine zweite Pose des Fahrzeugs in dem Kartenkoordinatensystem abhängig von der Position der Landmarke bestimmt wird. Die Erfindung betrifft außerdem eine entsprechende Sensorvorrichtung für ein Fahrzeug.

Autonom fahrende Fahrzeuge ermitteln mit Hilfe geeigneter Sensoren und Algorithmen kontinuierlich ihre Position und Orientierung und können durch Vergleich mit einer digitalen Karte sicherstellen, dass sie sich in einem befahrbaren Bereich ohne statische Hindernisse befinden. Dafür kann während der Fahrt eine kontinuierliche Erfassung der Umgebung mit geeigneten Umfeldsensorsystemen wie Kameras, Radarsystemen und Lidarsystemen erfolgen. Die resultierenden digitalen Bilder oder Daten können mit Hilfe geeigneter Algorithmen analysiert werden, um prägnante Bildinhalte, sogenannte Features oder Landmarken, wie Flächen, Wände, Kanten, Bodenmarkierungslinien und Schnittpunkte von Bodenmarkierungslinien, zu erkennen und deren Position zu ermitteln.

Die Güte der Analyse-Ergebnisse kann bei gegebenen Randbedingungen mit dem Sensortyp variieren, sodass in der Regel mehrere Sensortypen gleichzeitig zum Einsatz kommen. Dies hat den Vorteil, dass die Fahrzeugposition und -orientierung auch in Parkinfrastrukturen wie Parkhäusern, bei denen im Vergleich zu öffentlichen Straßen und Autobahnen die Sicht oft eingeschränkt ist, stets berechnet werden kann.

Die Detektionsergebnisse können durch einen oder mehrere, gegebenenfalls sensorspezifische, Lokalisierungsalgorithmen mit Informationen der digitalen Karte verglichen werden, die den Landmarkentyp der Landmarken sowie deren Positionen in dem Kartenkoordinatensystem der digitalen Karte, also insbesondere innerhalb der Parkinfrastruktur, beschreiben. Auf Basis der aus der digitalen Karte ausgelesenen Position der detektierten Landmarken und unter Berücksichtigung des gemessenen Abstands zwischen Fahrzeug und detektierten Landmarken erfolgt die Ermittlung der Fahrzeugposition und -orientierung innerhalb in dem Kartenkoordinatensystem.

Der Betrieb der Umfeldsensorsysteme und der Lokalisierungsalgorithmen führt zu einem erhöhten Energieverbrauch, den das Bordnetz des Fahrzeugs zur Verfügung stellen muss, sowie zu einem hohen Bedarf an Rechenressourcen.

Dokument US 2020/0200545 A1 beschreibt ein Verfahren zur Detektion von Landmarken, bei dem die Detektion bestimmter Landmarkentypen auf einen Teil der erfassten Umgebungsdaten beschränkt wird. Beispielsweise wird also in einem Bildbereich der als stehendes Fahrzeug erkannt wird, auf eine Suche nach Bodenmarkierungslinien verzichtet und so weiter.

Der Erfindung liegt die Aufgabe zugrunde, den Bedarf an Rechenressourcen bei der Selbstlokalisierung eines Fahrzeugs anhand von Umfeldsensordaten zu reduzieren.

Diese Aufgabe wird gelöst durch den jeweiligen Gegenstand der unabhängigen Ansprüche. Vorteilhafte Weiterbildungen und bevorzugte Ausführungsformen sind Gegenstand der abhängigen Ansprüche.

Die Erfindung beruht auf der Idee, basierend auf einer ersten Pose eines Fahrzeugs eine zuvor gespeicherte Zuordnungsvorschrift zu lesen, die der ersten Pose einen Sensortyp oder einen Landmarkentyp zuordnet. Basierend auf der Zuordnung wird ein erster Teil von Umfeldsensordaten ausgewählt, der mittels eines ersten Umfeldsensorsystems erzeugt wurde, das gemäß einem ersten Sensortyp ausgestaltet ist. Ein entsprechender erster Landmarkendetektionsalgorithmus wird verwendet, um eine Landmarke basierend auf dem ersten Teil der Umfeldsensordaten zu detektieren.

Gemäß einem Aspekt der Erfindung wird ein Verfahren zur Selbstlokalisierung eines Fahrzeugs in einer Parkinfrastruktur angegeben, wobei eine erste Pose des Fahrzeugs in einem Kartenkoordinatensystem einer auf einem Speichermedium, insbesondere des Fahrzeugs, gespeicherten digitalen Karte bestimmt wird. Eine auf dem Speichermedium gespeicherte Zuordnungsvorschrift wird, insbesondere mittels der wenigstens einen Recheneinheit, gelesen, wobei die Zuordnungsvorschrift der ersten Pose wenigstens einen bevorzugten Sensortyp oder wenigstens einen vorherrschenden Landmarkentyp, insbesondere einer Umgebung der ersten Pose vorherrschenden Landmarkentyp, zuordnet. Mittels einer Umfeldsensoreinrichtung des Fahrzeugs werden Umfeldsensordaten erzeugt, die eine Umgebung des Fahrzeugs darstellen. Ein erster Teil der Umfeldsensordaten, der mittels eines gemäß einem ersten Sensortyp ausgebildeten ersten Umfeldsensorsystems der Umfeldsensoreinrichtung erzeugt wurde, wird, insbesondere mittels der wenigstens einen Recheneinheit, abhängig von der gelesenen Zuordnungsvorschrift, also insbesondere abhängig von der Zuordnung der ersten Pose zu dem wenigstens einen bevorzugten Sensortyp oder dem wenigstens einen vorherrschenden Landmarkentyp, ausgewählt. Eine Landmarke in der Umgebung des Fahrzeugs wird, insbesondere mittels der wenigstens einen Recheneinheit, basierend auf den Umfeldsensordaten detektiert und eine Position der Landmarke in dem Kartenkoordinatensystem wird bestimmt. Dabei wird zum Detektieren der Landmarke ein erster Landmarkendetektionsalgorithmus auf den ersten Teil der Umfeldsensordaten angewendet. Eine zweite Pose des Fahrzeugs in dem Kartenkoordinatensystem wird, insbesondere mittels der wenigstens einen Recheneinheit, abhängig von der Position der Landmarke und optional abhängig von der ersten Pose, bestimmt. Das Fahrzeug ist insbesondere als Kraftfahrzeug ausgestaltet, beispielsweise als Kraftwagen.

Unter der Selbstlokalisierung kann insbesondere verstanden werden, dass das Fahrzeug selbst, insbesondere die wenigstens eine Recheneinheit, die zweite Pose bestimmt. Die erste Pose kann zuvor ebenfalls durch das Fahrzeug, insbesondere die wenigstens eine Recheneinheit, bestimmt werden. Die Bestimmung der ersten Pose kann dabei in bekannter Weise erfolgen, also beispielsweise unter Verwendung des ersten und/oder des zweiten Umfeldsensorsystems und/oder sonstiger Umfeldsensorsystem des Fahrzeugs. Die erste Pose kann auch basierend auf Geokoordinaten, die mittels eines Empfängers für Signale eines globalen Navigationssatellitensystems, GNSS, wie etwa GPS, GLONASS, Galileo und/oder Beidou, bestimmt werden. Alternativ kann die erste Pose auch auf andere Weise vorgegeben und der wenigstens einen Recheneinheit bereitgestellt werden.

Eine Pose beinhaltet hier und im Folgenden eine Position und kann, insbesondere im Falle einer Pose des Fahrzeugs, zusätzlich eine Orientierung beinhalten, beides insbesondere in dem Kartenkoordinatensystem, soweit nichts anders erwähnt ist. Die erste Pose des Fahrzeugs beinhaltet insbesondere eine erste Position und eine erste Orientierung des Fahrzeugs in dem Kartenkoordinatensystem. Die zweite Pose des Fahrzeugs beinhaltet insbesondere eine zweite Position und eine zweite Orientierung des Fahrzeugs in dem Kartenkoordinatensystem. Das Fahrzeug weist die erste Pose dabei zu einem ersten Zeitpunkt auf und die zweite Pose zu einem zweiten Zeitpunkt, der nach dem ersten Zeitpunkt liegt.

Bei der Parkinfrastruktur kann es sich beispielsweise um ein Parkhaus, einen Parkplatz oder eine sonstige Parkfläche handeln. Die Parkinfrastruktur weist mehrere Parkplätze auf in denen Fahrzeuge, insbesondere Kraftfahrzeuge, beispielsweise Kraftwägen, parken können. Beispielsweise kann es sich um eine Parkinfrastruktur zum Valet-Parken handeln, wobei das Fahrzeug von einem menschlichen Fahrer oder Benutzer bis in eine Einfahrtzone der Parkinfrastruktur gebracht wird. Der Fahrer oder Benutzer kann dann das Fahrzeug verlassen und anschließend kann das Fahrzeug autonom einparken.

Bei dem Verfahren handelt es sich dann also um ein Verfahren zur Selbstlokalisierung eines vollautonom fahrbaren Fahrzeugs, das auch als selbstfahrendes Fahrzeug bezeichnet werden kann. In anderen Ausführungsformen ist das Fahrzeug jedoch nicht notwendigerweise zum vollautonomen Fahren ausgestaltet. Beispielsweise kann die Selbstlokalisierung dann für teilautonome Fahrfunktionen oder zur Fahrerassistenz verwendet werden.

Unter einer Landmarke können Merkmale und/oder Muster in einer Umgebung verstanden werden, die identifiziert werden können und denen zumindest eine Ortsinformation oder Positionsinformation zugeordnet werden kann. Dies können beispielsweise charakteristische Punkte oder Objekte sein, die an bestimmten Positionen in der Umgebung angeordnet sind.

Einer Landmarke kann ein Landmarkentyp zugeordnet sein, insbesondere anhand einer oder mehrerer geometrischer und/oder semantischer Eigenschaften der Landmarke. So können beispielsweise Fahrbahnmarkierungen, Fahrspurmarkierungen, sonstige Bodenmarkierungslinien, Gebäudekanten oder -ecken, Masten, Pfosten, Verkehrs-, Hinweis- oder andere Schilder, Bauwerke, Elemente einer Vegetation, Bauwerke oder Teile davon, Teile von Verkehrsleitsystemen, zweidimensionale Codes, etwa QR-Codes oder Barcodes, alphanumerische Ausdrücke und so weiter jeweils als Landmarkentypen definiert sein. Eine Landmarke kann dabei auch mehreren Landmarkentypen zugeordnet sein.

Die Zuordnung der ersten Pose zu dem wenigstens einen bevorzugt Sensortyp oder den wenigstens einen vorherrschenden Landmarkentyp kann als Zuordnung der Umgebung des Fahrzeugs, wenn sich dieses an der ersten Position der ersten Pose befindet, zu dem wenigstens einen bevorzugten Sensortyp oder dem wenigstens einen vorherrschenden Sensortyp verstanden werden.

Die Umfeldsensoreinrichtung beinhaltet wenigstens zwei Umfeldsensorsysteme, nämlich das erste Umfeldsensorsystem und ein zweites Umfeldsensorsystem. Das zweite Umfeldsensorsystem ist gemäß einem zweiten Sensortyp ausgebildet, wobei sich der zweite Sensortyp von dem ersten Sensortyp unterscheidet.

Im Allgemeinen können bei der Erzeugung der Umfeldsensordaten das erste Umfeldsensorsystem und das zweite Umfeldsensorsystem aktiviert sein, sowie gegebenenfalls weitere Umfeldsensorsystems der Umfeldsensoreinrichtung. Dementsprechend enthalten die Umfeldsensordaten im Allgemeinen neben dem ersten Teil auch einen zweiten Teil, der mittels des zweiten Umfeldsensorsystems erzeugt wurde.

Zum Detektieren der Landmarke wird jedoch der zweite Teil der Umfeldsensordaten nicht verwendet. Mit anderen Worten wird die Landmarke unabhängig von dem zweiten Teil der Umfeldsensordaten bestimmt.

Die wenigstens eine Recheneinheit enthält ein erstes Detektormodul, welches ein Softwaremodul ist und den ersten Landmarkendetektionsalgorithmus implementiert beziehungsweise speichert. Das erste Detektormodul wird also zum Detektieren der Landmarke aktiviert.

Die wenigstens eine Recheneinheit enthält insbesondere auch ein zweites Detektormodul, welches ein Softwaremodul ist und einen zweiten Landmarkendetektionsalgorithmus implementiert beziehungsweise speichert. Der zweite Landmarkendetektionsalgorithmus ist zur Landmarkendetektion basierend auf einem zweiten Teil der Umfeldsensordaten, der mittels eines gemäß einem zweiten Sensortyp ausgebildeten zweiten Umfeldsensorsystems der Umfeldsensoreinrichtung erzeugt wurde, ausgestaltet. Das zweite Detektormodul wird zum Detektieren der Landmarke jedoch nicht aktiviert beziehungsweise wird zum Detektieren der Landmarke deaktiviert.

Unter einem Landmarkendetektionsalgorithmus kann im Allgemeinen ein Algorithmus verstanden werden, der dazu ausgestaltet ist, basierend auf Sensordaten, insbesondere eines oder mehrerer Umfeldsensorsysteme, eine oder mehrere Landmarken zu identifizieren und deren Position bezüglich des jeweiligen Umfeldsensorsystems, insbesondere bezüglich des Fahrzeugs, zu bestimmen und optional die Landmarke zu klassifizieren. Ein Landmarkendetektionsalgorithmus kann insbesondere als Algorithmus zur automatischen Wahrnehmung, beispielsweise als Algorithmus zur automatischen visuellen Wahrnehmung ausgestaltet sein.

Der erste und der zweite Landmarkendetektionsalgorithmus unterscheiden sich insofern, als dass sie zur Detektion der Landmarke basierend auf unterschiedlichen Sensordaten, also insbesondere basierend auf Sensordaten von Umfeldsensorsystemen, die gemäß unterschiedlichen Sensortypen ausgebildet sind, ausgestaltet sind. Während der erste Landmarkendetektionsalgorithmus beispielsweise zur Landmarkendetektion basierend auf Kamerabildern oder Lidar-Punktwolken ausgestaltet sein kann, kann der zweite Landmarkendetektionsalgorithmus beispielsweise zur Landmarkendetektion basierend auf Radardaten ausgestaltet sein oder umgekehrt. Es sind jedoch auch andere Konstellationen und Sensortypen beziehungsweise Arten von Sensordaten möglich.

Algorithmen zur automatischen visuellen Wahrnehmung, die auch als Computer-Vision-Algorithmen, Algorithmen zum maschinellen Sehen oder Machine-Vision-Algorithmen bezeichnet werden können, können als Computeralgorithmen zur automatischen Durchführung einer visuellen Wahrnehmungsaufgabe betrachtet werden. Eine visuelle Wahrnehmungsaufgabe, die auch als Computer-Vision-Aufgabe bezeichnet wird, kann beispielsweise als eine Aufgabe zur Extraktion von Informationen aus Bilddaten verstanden werden. Insbesondere kann die visuelle Wahrnehmungsaufgabe prinzipiell von einem Menschen ausgeführt werden, der in der Lage ist, ein den Bilddaten entsprechendes Bild visuell wahrzunehmen. Im vorliegenden Zusammenhang werden visuelle Wahrnehmungsaufgaben jedoch auch automatisch durchgeführt, ohne dass die Unterstützung eines Menschen erforderlich ist.

Ein Computer-Vision-Algorithmus kann beispielsweise einen Bildverarbeitungsalgorithmus oder einen Algorithmus zur Bildanalyse enthalten, der durch maschinelles Lernen trainiert wird oder wurde und beispielsweise auf einem künstlichen neuronalen Netzwerk, insbesondere einem faltenden neuronalen Netz, basieren kann. Der Computer-Vision-Algorithmus kann beispielsweise einen Objekterkennungsalgorithmus, einen Hinderniserkennungsalgorithmus, einen Objektverfolgungsalgorithmus, einen Klassifikationsalgorithmus und/oder einen Segmentierungsalgorithmus umfassen.

Entsprechende Algorithmen können analog auch basierend auf anderen Eingabedaten als von einem Menschen visuell wahrnehmbaren Bildern durchgeführt werden. Beispielsweise können auch Punktwolken oder Bilder von Infrarotkameras, Lidarsystemen et cetera mittels entsprechend angepasster Computeralgorithmen ausgewertet werden. Streng genommen handelt es sich bei den entsprechenden Algorithmen nicht um Algorithmen zur visuellen Wahrnehmung, da die entsprechenden Sensoren in Bereichen arbeiten können, die visuell, also für das menschliche Auge, nicht wahrnehmbar sind, zum Beispiel im Infrarotbereich. Deshalb werden solche Algorithmen im Rahmen der vorliegenden Erfindung Algorithmen zur automatischen Wahrnehmung bezeichnet. Algorithmen zur automatischen Wahrnehmung schließen also Algorithmen zur automatischen visuellen Wahrnehmung ein, sind aber im Hinblick auf eine menschliche Wahrnehmung nicht auf diese beschränkt. Folglich kann ein Algorithmus zur automatischen Wahrnehmung nach diesem Verständnis einen Computeralgorithmus zur automatischen Durchführung einer Wahrnehmungsaufgabe enthalten, der beispielsweise durch maschinelles Lernen trainiert wird oder wurde und insbesondere auf einem künstlichen neuronalen Netzwerk basieren kann. Zu solchen verallgemeinerten Algorithmen zur automatischen Wahrnehmung können auch Objektdetektionsalgorithmen, Objektverfolgungsalgorithmen, Klassifizierungsalgorithmen und/oder Segmentierungsalgorithmen, zum Beispiel semantische Segmentierungsalgorithmen, gehören.

Falls ein künstliches neuronales Netzwerk zur Implementierung eines Algorithmus zur automatischen visuellen Wahrnehmung verwendet wird, ist eine häufig eingesetzte Architektur die eines faltendes neuronales Netzwerks, CNN. Insbesondere kann ein 2D-CNN auf entsprechende 2D-Kamerabilder angewendet werden. Auch für andere Algorithmen zur automatischen Wahrnehmung können CNNs verwendet werden. Beispielsweise können 3D-CNNs, 2D-CNNs oder 1D-CNNs auf Punktwolken angewendet werden, abhängig von den räumlichen Dimensionen der Punktwolke und den Details der Verarbeitung.

Das Ergebnis oder die Ausgabe eines Algorithmus zur automatischen Wahrnehmung ist abhängig von der spezifischen zugrundeliegenden Wahrnehmungsaufgabe. Beispielsweise kann die Ausgabe eines Objekterkennungsalgorithmus eine oder mehrere Begrenzungsboxen enthalten, die eine räumliche Position und optional eine Orientierung eines oder mehrerer entsprechender Objekte in der Umgebung und/oder entsprechende Objektklassen für das eine oder die mehreren Objekte definieren. Ein semantischer Segmentierungsalgorithmus, der auf ein Kamerabild angewendet wird, kann eine Klasse auf Pixelebene für jedes Pixel des Kamerabildes enthalten. Analog dazu kann ein semantischer Segmentierungsalgorithmus, der auf eine Punktwolke angewendet wird, eine entsprechende Punktebenen-Klasse für jeden der Punkte enthalten. Die Klassen auf Pixelebene beziehungsweise auf Punktebene können beispielsweise einen Objekttyp definieren, zu dem der jeweilige Pixel oder Punkt gehört.

Der wenigstens eine bevorzugte Sensortyp beinhaltet insbesondere den ersten Sensortyp und nicht den zweiten Sensortyp. Der wenigstens eine Sensortyp entspricht einem oder mehreren Sensortypen, die sich erfahrungsgemäß, wie beispielsweise anhand vorgelagerter Analysefahrten bestimmt wurde, besonders gut zur Selbstlokalisierung in dem entsprechenden Umgebungsbereich der ersten Pose oder ersten Position eignet. Um welche Sensortypen es sich dabei konkret handelt, kann beispielsweise vorab bestimmt werden, indem die Landmarke und verschiedene weitere Landmarken in der Parkinfrastruktur erfasst und klassifiziert werden, so dass Ihnen jeweils ein entsprechender Landmarkentyp und ein damit verknüpfter bevorzugter Sensortyp zugeordnet werden kann. Insbesondere ist jedem Landmarkentyp wenigstens ein Sensortyp zugeordnet. Auf diese Weise kann die wenigstens eine Recheneinheit, wenn die aus dem Speichermedium gelesene Zuordnungsvorschrift der ersten Pose den wenigstens einen vorherrschenden Landmarkentyp zuordnet, einen entsprechenden bevorzugten Sensortyp oder wenigstens einen entsprechenden bevorzugten Sensortyp ableiten.

Die Zuordnungsvorschrift kann dabei beispielsweise als Teil der digitalen Karte gespeichert sein, insbesondere als zusätzliches Kartenlayer oder zusätzliche Kartenschicht. So kann also beispielsweise für den gesamten Bereich der Parkinfrastruktur eine entsprechende Zuordnung für jede beliebige Position oder Pose vorgegeben sein.

Das Aktivieren des ersten Detektormoduls kann derart verstanden werden, dass es auch das aktiviert Lassen des ersten Detektormoduls beinhaltet, falls das erste Detektormodul zum entsprechenden Zeitpunkt bereits aktiviert ist. Analog kann das Deaktivieren des zweiten Detektormoduls auch das deaktiviert Lassen des zweiten Detektormoduls beinhalten, wenn das zweite Detektormodul zum entsprechenden Zeitpunkt bereits deaktiviert ist.

Unter einem Umfeldsensorsystem kann im Allgemeinen ein Sensorsystem verstanden werden, das dazu in der Lage ist, Umfeldsensordaten oder Sensorsignale zu erzeugen, die die Umgebung des Fahrzeugs beziehungsweise des Umfeldsensorsystems abbilden, darstellen oder sonstig wiedergeben. Beispielsweise können Kameras, Radarsysteme, Lidarsysteme oder Ultraschallsensorsysteme als Umfeldsensorsysteme verstanden werden.

Unter einem Sensortyp kann dem entsprechend die konkrete Ausgestaltung des jeweiligen Umfeldsensorsystems als Kamera, Radarsystem, Lidarsystem oder Ultraschallsensorsystem verstanden werden. Je nach Ausführungsform des Verfahrens kann auch eine noch detailliertere Unterscheidung verschiedener Sensortypen, beispielsweise verschiedener Kameras, etwa Kameras, die im sichtbaren Bereich oder im infraroten Bereich arbeiten und so weiter, verschiedene Radarsysteme, die beispielsweise im Nahbereich oder im Fernbereich besonders empfindlich sind, verschiedene Lidarsysteme, wie etwa Laserscanner oder Flash-Lidarsysteme, und so weiter, unterschieden werden. In anderen Ausführungsformen kann auch eine gröbere Einteilung zwischen verschiedenen Sensortypen, beispielsweise nach detektierten physikalischen Phänomenen betrachtet werden. So können beispielsweise optische Sensorsysteme von Sensorsystemen, die empfindlich bezüglich Funkwellen sind oder von solchen, die bezüglich Ultraschallwellen und so weiter empfindlich sind, unterschieden werden. Auch eine Kombination verschiedener Kategorisierungen ist so möglich.

Die Aktivierung des ersten Detektormoduls und/oder die Deaktivierung des zweiten Detektormoduls erfolgt nicht notwendigerweise abrupt beziehungsweise gleichzeitig. Vielmehr kann auch ein Überblenden vorgesehen sein, so dass in einem Übergangszeitraum beide Detektormodule, also das erste und das zweite Detektormodul, aktiviert sind und zur Selbstlokalisierung verwendet werden. Auch ist es nicht notwendigerweise erforderlich, dass die Aktivierung des ersten Detektormoduls und/oder die Deaktivierung des zweiten Detektormoduls beziehungsweise die Überblendung unmittelbar nach dem Lesen der Zuordnungsvorschrift erfolgt. Beispielsweise kann die Zuordnungsvorschrift auch proaktiv zu einem früheren Zeitpunkt gelesen werden, so dass der Fahrzeugrecheneinheit mehr Zeit zur Verfügung steht, die Aktivierung, Deaktivierung oder Überblendung zu planen.

Schließlich ist die Zuordnungsvorschrift auch nicht notwendigerweise die einzige Bedingung und/oder die einzige Grundlage zum Aktivieren des ersten Detektormoduls oder zum Deaktivieren des zweiten Detektormoduls. Insbesondere können weitere Randbedingungen, beispielsweise eine Momentangeschwindigkeit des Fahrzeugs oder eine zur Selbstlokalisierung erforderliche Genauigkeit oder Mindestgenauigkeit in die Entscheidung einfließen.

Durch die Berücksichtigung der Zuordnung des wenigstens einen bevorzugten Sensortyps, direkt über die Zuordnung der ersten Pose zu dem wenigstens einen bevorzugten Sensortyp anhand der Zuordnungsvorschrift oder indirekt über die Zuordnung der ersten Pose zu dem wenigstens einen vorherrschenden Landmarkentyp, können also insbesondere während der Selbstlokalisierung nur solche Detektormodule aktiviert sein, die mit hoher Wahrscheinlichkeit einen vergleichsweise großen Nutzen für die Selbstlokalisierung bieten können, weil entsprechende Landmarken oder Features in der entsprechenden Umgebung der ersten Pose vorhanden sind. Im Gegensatz zum kontinuierlichen Parallelbetrieb aller zur Verfügung stehender Detektormodule werden durch das erfindungsgemäße Verfahren Rechenressourcen eingespart. Diese eingesparten Rechenressourcen können mit Vorteil für anderen Rechenaufgaben eingesetzt werden. Gerade im Kontext selbstfahrender Fahrzeuge oder hochgradig automatisierter Fahrzeuge und der Beschränkten Rechenleistung dort häufig eingesetzter eingebetteter Systeme wirkt sich die Erfindung daher besonders vorteilhaft aus..

Gemäß zumindest einer Ausführungsform des Verfahrens wird der zweite Landmarkendetektionsalgorithmus, der zur Landmarkendetektion basierend auf dem zweiten Teil der Umfeldsensordaten, ausgestaltet ist, abhängig von der Zuordnungsvorschrift deaktiviert. Mit anderen Worten wird das zweite Detektormodul abhängig von der Zuordnungsvorschrift deaktiviert.

Die Deaktivierung des zweiten Detektormoduls impliziert nicht notwendigerweise die Deaktivierung des zweiten Umfeldsensorsystems. Insbesondere können das erste und das zweite Umfeldsensorsystem, und optional gegebenenfalls weitere Umfeldsensorsysteme der Umfeldsensoreinrichtung, aktiviert sein, um die Umfeldsensordaten zu erzeugen. Mit anderen Worten wird sowohl der erste Teil als auch der zweite Teil der Umfeldsensordaten erzeugt. Während der erste Teil zu Detektion der Landmarke verwendet wird, wird der zweite Teil jedoch nicht zur Detektion der Landmarke verwendet. De zweite Teil der Umfeldsensordaten kann jedoch stattdessen für andere Zwecke eingesetzt werden, beispielsweise für eine oder mehrere Sicherheitsfunktion, wie etwa eine Notbremsfunktion, eine Abstandsregelfunktion, eine Spurhalteassistenzfunktion und so weiter.

Beispielsweise kann eine Fahrfunktion zum automatischen oder teilweise automatischen Führen des Fahrzeugs oder eine Fahrerassistenzfunktion abhängig von dem zweiten Teil der Umfeldsensordaten ausgeführt werden.

Der erste und der zweite Teil der Umfeldsensordaten können auch als jeweilige Datenströme aufgefasst werden. Die Datenströme werden dann gewissermaßen kontinuierlich oder, im Sinne aufeinanderfolgender Einzelbilder oder Frames, quasi-kontinuierlich erzeugt.

Insbesondere kann ein weiterer Algorithmus, beispielsweise ein weiterer Algorithmus zur automatischen Wahrnehmung, auf den zweiten Teil der Umfeldsensordaten angewendet werden. Abhängig von einem Ergebnis des weiteren Algorithmus kann die wenigstens eine Recheneinheit wenigstens ein Steuersignal zum wenigstens teilweise automatischen Führen des Fahrzeugs erzeugen. Das wenigstens einen Steuersignal kann beispielsweise an einen oder mehrere Aktuatoren des Fahrzeugs übermittelt werden, welche das wenigstens teilweise automatische Führen des Fahrzeugs umsetzen können.

Gemäß zumindest einer Ausführungsform beinhaltet das erste Umfeldsensorsystem ein optisches Sensorsystem oder besteht aus dem optischen Sensorsystem. Beispielsweise beinhaltet das zweite Umfeldsensorsystem ein Radarsystem oder besteht aus dem Radarsystem.

Unter einem optischen Sensorsystem kann dabei ein Sensorsystem verstanden werden, das auf der Detektion von Licht basiert, wobei Licht hier sowohl sichtbares Licht, als auch elektromagnetische Wellen im infraroten oder im ultravioletten Spektralbereich beinhalten kann. Mit anderen Worten beinhaltet ein optisches Sensorsystem wenigstens einen optischen Detektor. Kameras oder Lidarsysteme stellen insbesondere optische Sensorsysteme dar.

Solche Ausführungsformen sind insbesondere vorteilhaft, wenn sich in der Umgebung der ersten Pose entsprechende sichtbare oder mit infrarotem Licht detektierbare Landmarken befinden, die zur Selbstlokalisierung und insbesondere zur Bestimmung der zweiten Pose verwendet werden können, die jedoch nicht oder nicht mit ausreichender Zuverlässigkeit anhand von Radarsystemen detektiert werden können. Beispielsweise trifft dies in der Regel für Fahrbahnmarkierungen, Parkplatzmarkierungen oder sonstige Markierungslinien, oder Schnittpunkte von Fahrbahnmarkierungslinien und so weiter zu. Ferner trifft dies auch auf Landmarken zu, deren semantischer Inhalt zur Definition oder zur eindeutigen Identifikation der Landmarke erforderlich sind. Beispielsweise kann die Bedeutung eines Verkehrsschilds oder eines Hinweisschilds oder eines Warnschilds und so weiter anhand einer Kamera oder eines sonstigen optischen Sensorsystems gegebenenfalls mit einem nachgeschalteten Segmentierungs- oder Detektionsalgorithmus, bestimmt werden, wohingegen dies mit einem Radarsystem kaum möglich oder nicht möglich ist.

Gemäß solchen Ausführungsformen der Erfindung wird also das zweite Detektormodul zur Landmarkendetektion basierend auf Daten des Radarsystems deaktiviert, da es keinen wesentlichen Vorteil zur Selbstlokalisierung bietet.

Gemäß zumindest einer Ausführungsform, bei der das erste Umfeldsensorsystem das optische Sensorsystem enthält oder daraus besteht, beinhaltet die Landmarke wenigstens eine Bodenmarkierungslinie oder wenigstens einen Schnittpunkt der wenigstens einen Bodenmarkierungslinie. Mit anderen Worten wird die wenigstens eine Bodenmarkierungslinie oder der wenigstens eine Schnittpunkt der wenigstens einen Bodenmarkierungslinie als die Landmarke detektiert.

Gemäß zumindest einer Ausführungsform beinhaltet das erste Umfeldsensorsystem ein Radarsystem oder besteht aus dem Radarsystem. Beispielsweise beinhaltet das zweite Umfeldsensorsystem ein optisches Sensorsystem oder besteht aus dem optischen Sensorsystem.

Solche Ausführungsformen eignen sich besonders, wenn in der Umgebung der ersten Pose hauptsächlich Landmarken vorliegen, die mittels eines optischen Sensorsystems nicht oder nicht zuverlässig erfasst werden können, wohl aber durch ein Radarsystem. Beispielsweise können metallische Strukturen, die gegebenenfalls von anderen Objekten vollständig oder teilweise verdeckt sein können, zuverlässig durch Radarsysteme erkannt werden, wohingegen dies durch optische Sensorsysteme nicht der Fall ist. Solche metallischen Strukturen können beispielsweise in oder an Wänden oder sonstigen Gebäudeteilen integriert sein.

Gemäß zumindest einer Ausführungsform, bei der das erste Umfeldsensorsystem das Radarsystem enthält oder aus dem Radarsystem besteht, beinhaltet die Landmarke wenigstens eine Metallstruktur oder eine Gebäudewand oder einen Teil der Gebäudewand. Mit anderen Worten wird die wenigstens eine Metallstruktur oder die Gebäudewand oder der Teil der Gebäudewand als die Landmarke detektiert.

Gemäß zumindest einer Ausführungsform wird eine momentane Geschwindigkeit des Fahrzeugs bestimmt, beispielsweise mittels eines Geschwindigkeitssensors des Fahrzeugs. Der erste Teil der Umfeldsensordaten wird abhängig von der momentanen Geschwindigkeit bestimmt, insbesondere wird das erste Detektormodul abhängig von der momentanen Geschwindigkeit aktiviert.

Beispielsweise wird das zweite Detektormodul abhängig von der momentanen Geschwindigkeit deaktiviert.

Durch die zusätzliche Berücksichtigung der momentanen Geschwindigkeit kann dem Umstand Rechnung getragen werden, dass bestimmte Sensorsysteme oder die damit erzeugten Umfeldsensordaten im Stillstand des Fahrzeugs oder bei geringer Geschwindigkeit des Fahrzeugs besonders zuverlässig ist und bei höheren Geschwindigkeiten gegebenenfalls nicht. Letztlich kann so die Zuverlässigkeit der Selbstlokalisierung weiter erhöht werden.

Gemäß zumindest einer Ausführungsform wird der erste Teil der Umfeldsensordaten abhängig von einer vorgegebenen Lokalisierungsgenauigkeit bestimmt. Insbesondere wird das erste Detektormodul abhängig von der vorgegebenen Lokalisierungsgenauigkeit aktiviert.

Beispielsweise wird das zweite Umfeldsensorsystem abhängig von der vorgegebenen Lokalisierungsgenauigkeit deaktiviert.

Bei der Lokalisierungsgenauigkeit kann es sich beispielsweise um eine Sollgenauigkeit für die Lokalisierung oder für die Bestimmung der zweiten Pose oder eine vorgegebene Mindestgenauigkeit für die Lokalisierung der zweiten Pose handeln.

In solchen Ausführungsformen kann vermieden werden, dass Umfeldsensorsysteme, insbesondere das zweite Umfeldsensorsystem, deaktiviert wird, weil es gegebenenfalls nur einen geringen Beitrag zur Selbstlokalisierung liefert, obwohl es dennoch zu einer höheren Gesamtgenauigkeit der Lokalisierung führen könnte. Diese Ausführungsformen ermöglichen also eine Abwägung zwischen Energieverbrauch und Lokalisierungsgenauigkeit.

Gemäß zumindest einer Ausführungsform wird mittels des Fahrzeugs eine Analysefahrt in der Parkinfrastruktur durchgeführt, um die Zuordnungsvorschrift zu bestimmen, wobei während der Analysefahrt das erste Detektormodul aktiviert ist und das zweite Detektormodul aktiviert ist.

Die Analysefahrt findet dabei insbesondere vor der Bestimmung der ersten und der zweiten Pose statt. Während der Analysefahrt kann das Fahrzeug also die Art und Lage der Landmarke und gegebenenfalls weiterer vorhandener Landmarken in der Parkinfrastruktur bestimmen und so die Zuordnungsvorschrift erzeugen beziehungsweise aktualisieren. Mit anderen Worten wird die zusätzliche Kartenschicht mit der Zuordnungsvorschrift auf diese Weise erzeugt. Bei der Analysefahrt muss es sich nicht notwendigerweise um eine eigens zum Zweck der Bestimmung der Zuordnungsvorschrift durchgeführte Fahrt handeln, sondern es kann sich um eine normale Benutzung des Fahrzeugs in der Parkinfrastruktur handeln. So kann durch die Analysefahrt, oder gegebenenfalls durch mehrere Analysefahrten, die Kartenschicht mit der Zuordnungsvorschrift um weitere Zuordnungsvorschriften entsprechend ergänzt werden und Schritt für Schritt aufgebaut werden, so dass die Erfindung immer umfangreicher genutzt werden kann.

Die Analysefahrt kann zusätzlich oder alternativ auch mit einem weiteren Fahrzeug in der Parkinfrastruktur durchgeführt werden. Während der Analysefahrt ist dann insbesondere sowohl ein entsprechendes weiteres erstes Detektormodul aktiviert als auch ein entsprechendes weiteres zweites Detektormodul des weiteren Fahrzeugs. Die obigen Ausführungen bezüglich der Umfeldsensoreinrichtung, des ersten und des zweiten Umfeldsensorsystems und des ersten und des zweiten Detektormoduls lassen sich analog auf eine entsprechende weitere Umfeldsensoreinrichtung des weiteren Fahrzeugs, ein entsprechendes erstes und des zweites Umfeldsensorsystem der weiteren Umfeldsensoreinrichtung sowie das erste und zweite weitere Detektormodul übertragen.

Insbesondere werden während der Analysefahrt des Fahrzeugs mittels der Umfeldsensoreinrichtung weitere Umfeldsensordaten erzeugt. Der erste Landmarkendetektionsalgorithmus sowie der zweite Landmarkendetektionsalgorithmus werden auf die weiteren Umfeldsensordaten angewendet, um die Zuordnungsvorschrift zu bestimmen.

In alternativen Ausführungsformen werden während der Analysefahrt des Fahrzeugs mittels der Umfeldsensoreinrichtung weitere Umfeldsensordaten erzeugt. Der erste Landmarkendetektionsalgorithmus sowie der zweite Landmarkendetektionsalgorithmus werden auf die weiteren Umfeldsensordaten angewendet, um die Zuordnungsvorschrift zu bestimmen.

Statt die Zuordnungsvorschrift mittels der wenigstens einen Recheneinheit oder der wenigstens einen weiteren Recheneinheit zu bestimmen, kann diese basierend auf den weiteren Umfeldsensordaten auch von einer fahrzeugexternen Recheneinheit, beispielsweise einer Cloud-Recheneinheit oder einem Cloud-Server bestimmt und gespeichert werden und insbesondere an das Fahrzeug übermittelt werden.

Gemäß zumindest einer Ausführungsform wird das erste Umfeldsensorsystem abhängig von der Zuordnungsvorschrift aktiviert wird und das zweite Umfeldsensorsystem wird abhängig von der Zuordnungsvorschrift deaktiviert. Die die Umfeldsensordaten werden mittels des ersten Umfeldsensorsystems erzeugt und insbesondere unabhängig von dem zweiten Umfeldsensorsystem. Mit anderen Worten enthalten die Umfeldsensordaten den ersten Teil, nicht jedoch den zweiten Teil.

Dadurch kann Energie zum Betrieb des zweiten Umfeldsensorsystems eingespart werden.

Es wird darauf hingewiesen, dass die Umfeldsensoreinrichtung neben dem ersten und dem zweiten Umfeldsensorsystem in verschiedenen Ausführungsformen eines oder mehrere weitere Umfeldsensorsysteme enthalten kann. Das eine oder die mehreren weiteren Umfeldsensorsysteme können beispielsweise aktiviert bleiben, wenn das zweite Umfeldsensorsystem deaktiviert wird. Mit anderen Worten bestehen die Umfeldsensordaten nicht notwendigerweise nur aus dem ersten Teil, wenn das zweite Umfeldsensorsystem deaktiviert wurde. Vielmehr können die Umfeldsensordaten einen oder mehrere weitere Teile beinhalten, die mittels des einen oder den mehreren weiteren Umfeldsensorsystemen erzeugt wurden. Abhängig von der Zuordnungsvorschrift können der eine oder die mehreren weiteren Teile zur Detektion der Landmarke verwendet werden. Alternativ kann die Landmarke ausschließlich basierend auf dem ersten Teil der Umfeldsensordaten detektiert werden.

Gemäß einem weiteren Aspekt der Erfindung wird eine Sensorvorrichtung für ein Fahrzeug, insbesondere ein Kraftfahrzeug, beispielsweise ein selbstfahrendes Fahrzeug, angegeben. Die Sensorvorrichtung weist eine Umfeldsensoreinrichtung auf, die dazu eingerichtet ist, Umfeldsensordaten zu erzeugen, die eine Umgebung des Fahrzeugs darstellen, ein Speichermedium, das eine digitale Karte speichert, sowie ein Steuerungssystem. Das Steuerungssystem ist dazu eingerichtet, eine erste Pose des Fahrzeugs in einem Kartenkoordinatensystem der digitalen Karte zu bestimmen. Das Steuerungssystem ist dazu eingerichtet, basierend auf den Umfeldsensordaten eine Landmarke in der Umgebung zu detektieren und eine Position der Landmarke in dem Kartenkoordinatensystem zu bestimmen. Das Steuerungssystem ist dazu eingerichtet, eine zweite Pose des Fahrzeugs in dem Kartenkoordinatensystem abhängig von der Position der Landmarke zu bestimmen. Die Umfeldsensoreinrichtung enthält ein gemäß einem ersten Sensortyp ausgebildetes erstes Umfeldsensorsystem, das dazu eingerichtet ist, einen ersten Teil der Umfeldsensordaten zu erzeugen. Das Steuerungssystem ist dazu eingerichtet, eine auf dem Speichermedium gespeicherte Zuordnungsvorschrift zu lesen, welche der ersten Pose wenigstens einen bevorzugt Sensortyp oder wenigstens einen vorherrschenden Landmarkentyp zuordnet. Das Steuerungssystem ist dazu eingerichtet, abhängig von der Zuordnungsvorschrift zum Detektieren der Landmarke den ersten Teil der Umfeldsensordaten auszuwählen und einen ersten Landmarkendetektionsalgorithmus auf den ersten Teil der Umfeldsensordaten anzuwenden.

Das Steuerungssystem kann dabei eine oder mehrere Recheneinheiten beinhalten. Insbesondere kann das Steuerungssystem die wenigstens eine Recheneinheit des Fahrzeugs, die bezüglich der verschiedenen Ausführungsformen des erfindungsgemäßen Verfahrens beschrieben wurde, beinhalten oder umgekehrt.

Weitere Ausführungsformen der erfindungsgemäßen Sensorvorrichtung folgen direkt aus den verschiedenen Ausgestaltungsformen des erfindungsgemäßen Verfahrens und umgekehrt. Insbesondere kann eine Sensorvorrichtung nach der Erfindung dazu eingerichtet sein, ein erfindungsgemäßes Verfahren durchzuführen oder es führt ein solches Verfahren durch.

Gemäß einem weiteren Aspekt der Erfindung wird ein elektronisches Fahrzeugführungssystem für ein Fahrzeug angegeben, das eine Sensorvorrichtung gemäß der Erfindung beinhaltet.

Unter einem elektronischen Fahrzeugführungssystem kann ein elektronisches System verstanden werden, das dazu eingerichtet ist, ein Fahrzeug vollautomatisch oder vollautonom zu führen, insbesondere ohne dass ein Eingriff in eine Steuerung durch einen Fahrer erforderlich ist. Das Fahrzeug führt alle erforderlichen Funktionen, wie Lenk, Brems- und/oder Beschleunigungsmanöver, die Beobachtung und Erfassung des Straßenverkehrs sowie entsprechende Reaktionen automatisch durch. Insbesondere kann das elektronische Fahrzeugführungssystem einen vollautomatischen oder vollautonomen Fahrmodus des Kraftfahrzeugs nach Stufe 5 der Klassifizierung gemäß SAE J3016 implementieren. Unter einem elektronischen Fahrzeugführungssystem kann auch ein Fahrerassistenzsystem (englisch: "advanced driver assistance system", ADAS) verstanden werden, welches den Fahrer beim teilweise automatisierten oder teilautonomen Fahren unterstützt. Insbesondere kann das elektronische Fahrzeugführungssystem einen teilweise automatisierten oder teilautonomen Fahrmodus nach den Stufen 1 bis 4 gemäß der SAE J3016-Klassifizierung implementieren. Hier und im Folgenden bezieht sich "SAE J3016" auf die entsprechende Norm in der Version vom Juni 2018.

Die wenigstens teilweise automatische Fahrzeugführung kann es daher beinhalten, das Fahrzeug gemäß eines vollautomatischen oder vollautonomen Fahrmodus der Stufe 5 nach SAE J3016 zu führen. Die wenigstens teilweise automatische Fahrzeugführung kann auch beinhalten, das Fahrzeug gemäß eines teilweise automatisierten oder teilautonomen Fahrmodus nach den Stufen 1 bis 4 nach SAE J3016 zu führen.

Unter einer Recheneinheit kann insbesondere ein Datenverarbeitungsgerät verstanden werden, die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere digitale Signalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstelle und/oder eine oder mehrere Speichereinheiten. Gemäß einem weiteren Aspekt der Erfindung wird auch ein Kraftfahrzeug mit einer erfindungsgemäßen Sensorvorrichtung und/oder einem erfindungsgemäßen elektronischen Fahrzeugführungssystem angegeben.

Die Erfindung umfasst auch die Kombinationen der Merkmale der beschriebenen Ausführungsformen.

Im Folgenden werden Ausführungsbeispiele der Erfindung beschrieben. Hierzu zeigt:
- Fig.: eine schematische Darstellung einer beispielhaften Ausführungsform einer erfindungsgemäßen Sensorvorrichtung.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In der Fig. ist schematisch ein Kraftfahrzeug 2 gezeigt, insbesondere ein selbstfahrendes Kraftfahrzeug, das eine beispielhafte Ausführungsform einer erfindungsgemäßen Sensorvorrichtung 1 aufweist.

Die Sensorvorrichtung 1 enthält mindestens zwei Umfeldsensorsysteme 4a, 4b, die gemäß verschiedenen Sensortypen ausgestaltet sind. Beispielsweise kann es sich bei dem ersten Umfeldsensorsystem 4a um ein optisches Sensorsystem, beispielsweise eine Kamera, handeln und bei dem zweiten Umfeldsensorsystem 4b um ein Radarsystem. Die Erfindung ist jedoch nicht auf die Kombination dieser beiden genannten Sensortypen beschränkt, sondern kann für beliebige aber unterschiedliche Sensortypen angewandt werden.

Die Sensorvorrichtung 1 weist außerdem ein Steuerungssystem 3 mit einem Speichermedium 5 auf. Das Steuerungssystem 3 kann eine oder mehrere Recheneinheiten des Fahrzeugs beinhalten und kann zur Ansteuerung der Umfeldsensorsysteme 4a, 4b sowie zur Auswertung von den Umfeldsensorsystemen 4a, 4b erzeugten Umfeldsensordaten dienen.

Das Kraftfahrzeug 2 befindet sich insbesondere in einer Parkinfrastruktur. Beispielhaft sind mehrere verschiedene Landmarken 6a, 6b, 6c, 6d, 7, 8, 9a, 9c, 9d in der Parkinfrastruktur gezeigt. Die Landmarken 6a, 6b, 6c, 6d, 7, 8, 9a, 9b, 9c können dabei unterschiedlichen Landmarkentypen entsprechen. Beispielsweise kann es sich bei den Landmarken 6a, 6b, 6c, 6d um Bodenmarkierungslinien oder dergleichen handeln, beispielsweise zur Begrenzung von Parkplätzen. Bei der Landmarke 7 kann es sich beispielsweise um einen Pfosten oder ein Verkehrsschild oder dergleichen handeln. Bei der Landmarke 8 kann es sich um eine Wand oder ein sonstiges Gebäudeteil oder ein Teil eines sonstigen Bauwerks handeln. Bei den Landmarken 9a, 9b, 9c kann es sich beispielsweise um in der Wand integrierte Metallstrukturen, beispielsweise Stahlträger oder dergleichen handeln.

Je nach Landmarkentyp können die unterschiedlichen Umfeldsensorsysteme 4a, 4b unterschiedlich gut zur Detektion der entsprechenden Landmarken 6a, 6b, 6c, 6d, 7, 8, 9a, 9b, 9c geeignet sein und damit zur Selbstlokalisierung des Fahrzeugs 2 mehr oder weniger gut geeignet oder wertvoll sein.

Mittels der Sensorvorrichtung 1 kann beispielsweise ein erfindungsgemäßes Verfahren zur Selbstlokalisierung des Fahrzeugs 2 in der Parkinfrastruktur durchgeführt werden. Dazu kann zunächst eine erste Pose des Fahrzeugs 2 in einem Kartenkoordinatensystem einer auf dem Speichermedium 5 gespeicherten digitalen Karte bestimmt werden. Dies kann beispielsweise basierend auf Umfeldsensordaten, die mittels beider Umfeldsensorsysteme 4a, 4b erzeugt werden, erfolgen. Die Umfeldsensordaten können mit der digitalen Karte abgeglichen werden, so dass eine Position und/oder Orientierung des Fahrzeugs 2 in dem Kartenkoordinatensystem bestimmt werden kann. Dazu kann das Steuerungssystem 3 insbesondere die Umfeldsensordaten auswerten, um eine oder mehrere der Landmarken 6a, 6b, 6c, 6d, 7, 8, 9a, 9b, 9c zu detektieren. Da die Positionen der Landmarken 6a, 6b, 6c, 6d, 7, 8, 9a, 9b, 9c auch in der digitalen Karte gespeichert sind, kann das Kraftfahrzeug 2 dementsprechend lokalisiert werden.

In dem Steuerungssystem 3 ist ein dem ersten Umfeldsensorsystem 4a zugeordnetes erstes Detektormodul vorgesehen, das einen ersten Landmarkendetektionsalgorithmus implementiert. Ebenso ist in dem Steuerungssystem 3 ist ein dem zweiten Umfeldsensorsystem 4a zugeordnetes zweites Detektormodul vorgesehen, das einen zweiten Landmarkendetektionsalgorithmus implementiert. Der erste Landmarkendetektionsalgorithmus ist dabei derart ausgestaltet, dass er Landmarken basierend auf Umfeldsensordaten detektieren kann, die mittels des ersten Umfeldsensorsystems 4a erzeugt wurden, also beispielsweise basierend auf Kamerabildern. Der zweite Landmarkendetektionsalgorithmus ist derart ausgestaltet, dass er Landmarken basierend auf Umfeldsensordaten detektieren kann, die mittels des zweiten Umfeldsensorsystems 4b erzeugt wurden, also beispielsweise basierend auf Radardaten.

Die digitale Karte weist neben den Positionsinformationen betreffend die Landmarken 6a, 6b, 6c, 6d, 7, 8, 9a, 9b, 9c auch Informationen betreffend den jeweiligen Landmarkentyp der Landmarken 6a, 6b, 6c, 6d, 7, 8, 9a, 9b, 9c auf. Beispielsweise kann eine zusätzliche Kartenschicht vorhanden sein, die für jede Position in der Parkinfrastruktur eine entsprechende Zuordnungsvorschrift speichert, die der jeweiligen Position einen vorherrschenden Landmarkentyp in der Umgebung um die entsprechende Position zuordnet. Basierend auf der ersten bestimmten Pose des Fahrzeugs 2 kann das Steuerungssystem 3 dem entsprechend die Zuordnungsvorschrift aus der Karte lesen und sodann beispielsweise das erste Detektormodul abhängig von der Zuordnungsvorschrift aktiviert lassen, wohingegen es das zweite Detektormodul abhängig von der Zuordnungsvorschrift deaktiviert.

Das Steuerungssystem 3 kann also beispielsweise abhängig von der Zuordnungsvorschrift einen ersten Teil der Umfeldsensordaten auswählen, der mittels des ersten Umfeldsensorsystems 4a erzeugt wurde. Das erste Detektormodul kann dann auf den ersten Teil der Umfeldsensordaten angewendet werden, um eine Landmarke zu detektieren und basierend auf der Landmarke eine zweite Pose des Fahrzeugs 2 bestimmen.

Im oben skizzierten Beispiel, bei dem es sich bei dem ersten Umfeldsensorsystem 4a um eine Kamera handelt und bei dem zweiten Umfeldsensorsystem 4b um ein Radarsystem, kann die Zuordnungsvorschrift beispielsweise der bestimmten Pose des Fahrzeugs 2 den Landmarkentyp der Landmarken 6a, 6b, 6c, 6d, also beispielsweise Bodenmarkierungslinien, zuordnen. Da Bodenmarkierungslinien mit hoher Zuverlässigkeit mittels optischer Sensorsysteme wie einer Kamera erfasst und mittels des ersten Landmarkendetektionsalgorithmus identifiziert werden können, wohingegen die Detektion von Bodenmarkierungslinien anhand von Radardaten schwierig oder nicht möglich ist, kann das zweite Detektormodul entsprechend deaktiviert werden, ohne dass es zu einem signifikanten Verlust an Lokalisierungsgenauigkeit kommt. Auf diese Weise können die frei werdenden Rechenressourcen anderweitig eingesetzt werden.

Es soll betont werden, dass das beschriebene Szenario nur ein beispielhaftes Szenario und in anderen Situationen andere Entscheidungen zur Aktivierung und/oder Deaktivierung entsprechender Detektormodule getroffen werden können.

Insbesondere kann also während der Fahrt des Fahrzeugs 2 durch die Parkinfrastruktur kontinuierlich durch Abgleich mit der zusätzlichen Kartenschicht überprüft werden, welche Detektormodule in welchem Bereich der Parkinfrastruktur vorteilhafterweise aktiviert werden oder aktiviert bleiben sollten und welche Detektormodule deaktiviert werden können.

Autonom fahrende Fahrzeuge müssen mit Hilfe geeigneter Sensoren und Algorithmen kontinuierlich ihre Position und Orientierung ermitteln und durch Vergleich mit einer digitalen Karte sicherstellen, dass sie sich in einem befahrbaren Bereich ohne statische Hindernisse befinden. Dafür erfolgt während der Fahrt eine kontinuierliche Erfassung der Umgebung mit geeigneten Sensoren wie Kameras, Radaren und Lasern. Die resultierenden digitalen Bilder werden mit Hilfe geeigneter Algorithmen analysiert, um prägnante Bildinhalte, sogenannte Features oder Landmarken, wie Wandflächen, Kanten, Linien und Linienschnittpunkte zu erkennen und deren Position zu ermitteln.

Da die Güte der Analyse-Ergebnisse bei gegebenen Randbedingungen mit dem Sensortyp variiert, kommen bei autonom fahrenden Fahrzeugen in der Regel mehrere Sensortypen zum Einsatz. Dies hat den Vorteil, dass die Fahrzeugposition und -orientierung auch in Parkräumen, bei denen im Vergleich zu öffentlichen Straßen und Autobahnen die Sicht oft eingeschränkt ist, an jeder Stelle und zu jedem Zeitpunkt berechnet werden kann. So ist es beispielsweise möglich, in Bereichen mit vielen Bodenmarkierungen genügend Linien und Linienschnittpunkte visuell mit Hilfe von Kamerasystemen zu detektieren und die Berechnung der Fahrzeugposition und/oder -orientierung auf deren Basis durchzuführen. In Bereichen mit wenigen Bodenmarkierungen aber vielen metallischen Strukturen hingegen können deren Kanten und Flächen beispielsweise sehr gut mit Radaren detektiert und vom Lokalisierungs-Algorithmus für die Ermittlung der aktuellen Fahrzeugposition und/oder Orientierung verwendet werden.

Die Detektionsergebnisse kann ein Lokalisierungsalgorithmus mit Informationen einer digitalen Karte vergleichen, die den Landmarkentyp sowie deren Positionen innerhalb des Parkraums beschreiben. Auf Basis der aus der digitalen Karte ausgelesenen Position der detektierten Landmarken und unter Berücksichtigung des gemessenen Abstands zwischen Fahrzeug und detektierten Landmarken erfolgt die Ermittlung der Fahrzeugposition und - orientierung innerhalb des Parkraums.

Gemäß verschiedenen Ausführungsformen wird vorgeschlagen, während der autonomen oder assistierten Fahrt durch eine Parkinfrastruktur auf der Grundlage von Landmarkeneintragungen in einer digitalen Karte den überwiegend zu erwartenden Typ der Karteneintragungen im vorausliegenden Streckenabschnitt aus der digitalen Karte auszulesen und bei Einfahrt in diesen Streckenabschnitt zum Beispiels nur den entsprechenden Landmarkendetektionsalgorithmus zur Detektion visueller Features oder Landmarken zu betreiben während der Landmarkendetektionsalgorithmus zur Radar-Detektion von Kanten und Flächen metallischer Strukturen abgeschaltet wird.

Folgt dem vorausliegenden Streckenabschnitt dann ein Streckenabschnitt mit wenig visuellen Landmarken aber vielen metallischen Strukturen, soll nach dem Wechsel von dem vorausliegenden Streckenabschnitt in den übernächsten Streckenabschnitt der Landmarkendetektionsalgorithmus zur visuellen Detektion von Features oder Landmarken abgeschaltet und der Landmarkendetektionsalgorithmus zum Erkennen von Kanten und Flächen metallischer Strukturen mit Hilfe von Radarsignalen aktiviert werden.

Der dadurch im Vergleich zu einem kontinuierlichen Parallelbetrieb beider Landmarkendetektionsalgorithmus bereits reduzierte Rechenleistungsbedarf kann weiter verringert werden, wenn für Streckenabschnitte mit vorherrschenden visuellen Landmarken zusätzlich eine Ermittlung des hauptsächlich zu erwartenden visuellen Landmarkentyps erfolgt, während für Streckenabschnitte mit vorherrschenden Radar-Landmarken dementsprechend eine Ermittlung des hauptsächlich zu erwartenden Radar-Landmarkentyps durchgeführt wird.

Als Ergebnis kann sich beispielsweise ergeben, dass sehr viele Bodenmarkierungen in Form von Parkplatzbegrenzungslinien beziehungsweise entsprechender Linienschnittpunkte zu erwarten sind, während vertikale Pfähle und Säulen nur in geringer Anzahl vorkommen. Für einen Streckenabschnitt mit Radar-Landmarken-Dominanz kann sich zum Beispiel herausstellen, dass sehr viele kleinflächige Metallstrukturen mit klaren Kanten und nur wenige großflächige Metallstrukturen ohne scharfe Begrenzungen zu erwarten sind. Sind auch diese Informationen in der digitalen Karte vorhanden, ist es möglich, in einem Streckenabschnitt mit Dominanz visueller Features oder Landmarken nicht nur die Radar-Landmarken-Detektion, sondern auch die Detektions-Algorithmen für nicht zu erwartende visuelle Landmarken abzuschalten. Dementsprechend ist es möglich, in einem Streckenabschnitt mit Dominanz von metallischen Strukturen nicht nur die visuelle Landmarken-Detektion, sondern auch die Detektions-Algorithmen für nicht zu erwartende Radar-Landmarken abzuschalten. Die Aktivierung und Deaktivierung der visuellen und radarbasierten Lokalisierung sowie der Detektormodule kann dabei sowohl in Form eines harten Ein- und Ausschaltens als auch eines weichen Überblendens erfolgen. Um Sprünge in den Lokalisierungsergebnissen und damit der berechneten Fahrzeugposition zu vermeiden, kann die harte Umschaltung beziehungsweise alternativ die weiche Überblendung an Punkten beziehungsweise innerhalb von Bereichen erfolgen, von denen aus noch genügend Landmarken des aktuell verwendeten Typs, aber auch bereits genügend Landmarken des im nächsten Streckenabschnitt zu verwendeten Typs sichtbar sind. Die Umschaltpunkte wie auch Beginn und Ende der Überblendbereiche können ebenfalls der digitalen Karte entnommen werden.

Verschiedene Ausführungsformen der Erfindung beinalten auch eine automatische Generierung der digitalen Karte beziehungsweise die Ergänzung der digitalen Karten mit den zusätzlichen Informationen zu relevanten Landmarkentypen oder Sensortypen, beispielsweise Cloud-basiert.

Dazu kann während der Fahrt von Fahrzeugen einer vorgegebenen Fahrzeugflotte durch die Parkinfrastruktur zunächst eine Detektion der vorhandenen Features und Landmarken erfolgen und dann die Ermittlung des jeweilige Landmarkentyps sowie der jeweiligen Landmarkenposition. Sodann kann, beispielsweise nach dem Verlassen der Parkinfrastruktur analysiert werden, welche Landmarkentypen in welchen Bereichen des der Parkinfrastruktur gehäuft auftreten beziehungsweise den vorherrschenden Anteil darstellen.

Als weiterer Aspekt wird vorgeschlagen, nach dem Verlassen der Parkinfrastruktur zu analysieren, an welchen Stellen davon ausgegangen werden kann, dass eine Aktivierung und Deaktivierung der jeweiligen Umfeldsensorsysteme zu vernachlässigbaren Sprüngen in der Berechnung der Fahrzeugposition und -orientierung bei der späteren Nutzung der automatisch generierten, erweiterten digitalen Karte für die Selbstlokalisierung führt. Um auch ein weiches Ein- und Ausblenden der jeweiligen Umfeldsensorsysteme statt eines harten Ein- und Ausschaltens zu ermöglichen, kann nach dem Verlassen der Parkinfrastruktur darüber hinaus analysiert werden, an welchen Positionen ein Überblendvorgang begonnen und beendet werden sollte, damit etwaige Sprünge in der Berechnung der Fahrzeugposition und -orientierung bei der späteren Nutzung gering ausfallen.

So kann eine beispielsweise Cloud-basierte Generierung einer zusätzlichen Meta-Daten-Layer in einer digitalen Parkhauskarte mit zusätzlichen Informationen realisiert werden. Die zusätzlichen Informationen können dabei die vorherrschenden Landmarkentypen innerhalb von bestimmten Bereich und Angaben zu den Bereichsgrenzen, günstige Aktivierungspunkte für die Umfeldsensorsysteme im vorausliegenden Teilbereich, günstige Deaktivierungspunkte für die Umfeldsensorsysteme im zurückliegenden Teilbereich und/oder Beginn und Ende von günstigen Überblendbereichen für die Umfeldsensorsysteme betreffen.

Es können beispielsweise autonom durch Parkhäuser fahrende Fahrzeuge realisiert werden, die in Bereichen mit vorherrschenden Radar-Landmarken nur das Radarsystem und/oder den Algorithmus zur Detektion von Radar-Landmarken aktivieren und in Bereichen mit einer Häufung von visuellen Landmarken nur den optische Sensorsysteme und/oder Algorithmen zur Detektion von visuellen Landmarken aktivieren. So können erforderliche Rechenleistung, Kosten und/oder Energie reduziert werden.

### Bezugszeichenliste

- 1: Sensorvorrichtung
- 2: Kraftfahrzeug
- 3: Steuerungssystem
- 4a, 4b: Umfeldsensorsysteme
- 5: Speichermedium
- 6a, 6b, 6c, 6d: Landmarken
- 7, 8: Landmarken
- 9a, 9b, 9c: Landmarken

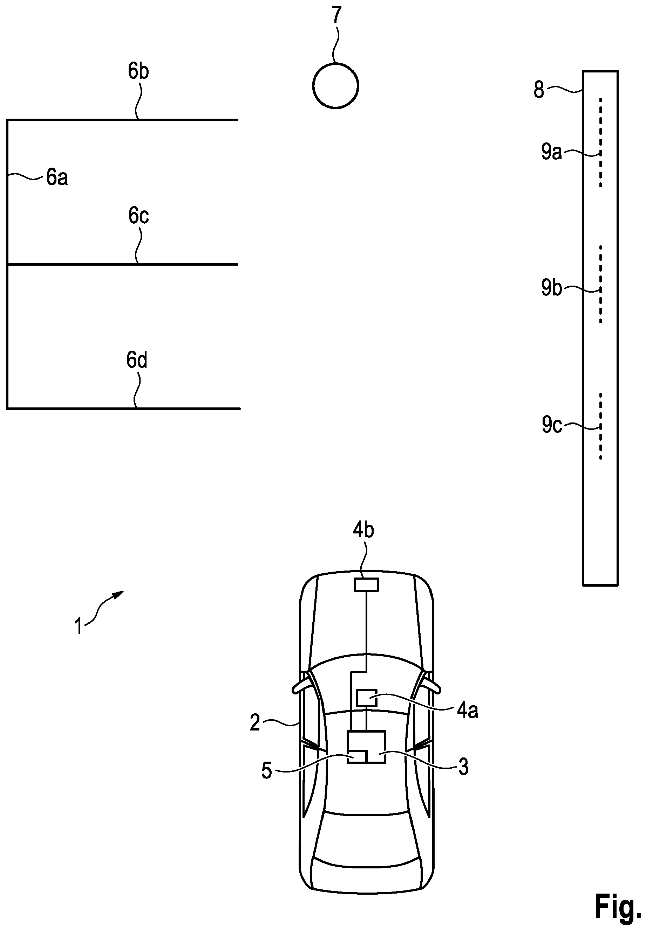

## Patentansprüche

1. Verfahren zur Selbstlokalisierung eines Fahrzeugs (2) in einer Parkinfrastruktur, wobei
- eine erste Pose des Fahrzeugs (2) in einem Kartenkoordinatensystem einer auf einem Speichermedium (5) gespeicherten digitalen Karte bestimmt wird;
- mittels einer Umfeldsensoreinrichtung (4a, 4b) des Fahrzeugs (2) Umfeldsensordaten erzeugt werden, die eine Umgebung des Fahrzeugs (2) darstellen;
- basierend auf den Umfeldsensordaten eine Landmarke (6a, 6b, 6c, 6d, 7, 7, 9a, 9d, 9c) in der Umgebung detektiert wird und eine Position der Landmarke (6a, 6b, 6c, 6d, 7, 7, 9a, 9d, 9c) in dem Kartenkoordinatensystem bestimmt wird; und
- eine zweite Pose des Fahrzeugs (2) in dem Kartenkoordinatensystem abhängig von der Position der Landmarke (6a, 6b, 6c, 6d, 7, 7, 9a, 9d, 9c) bestimmt wird;
**dadurch gekennzeichnet, dass**
- eine auf dem Speichermedium (5) gespeicherte Zuordnungsvorschrift gelesen wird, welche der ersten Pose wenigstens einen bevorzugten Sensortyp oder wenigstens einen vorherrschenden Landmarkentyp zuordnet;
- abhängig von der Zuordnungsvorschrift ein erster Teil der Umfeldsensordaten ausgewählt wird, der mittels eines gemäß einem ersten Sensortyp ausgebildeten ersten Umfeldsensorsystems (4a, 4b) der Umfeldsensoreinrichtung (4a, 4b) erzeugt wurde; und
- zum Detektieren der Landmarke (6a, 6b, 6c, 6d, 7, 7, 9a, 9d, 9c) ein erster Landmarkendetektionsalgorithmus auf den ersten Teil der Umfeldsensordaten angewendet wird.

2. Verfahren nach Anspruch 1,
**dadurch gekennzeichnet, dass**
ein zweiter Landmarkendetektionsalgorithmus, der zur Landmarkendetektion basierend auf einem zweiten Teil der Umfeldsensordaten, der mittels eines gemäß einem zweiten Sensortyp ausgebildeten zweiten Umfeldsensorsystems (4a, 4b) der Umfeldsensoreinrichtung (4a, 4b) erzeugt wurde, ausgestaltet ist, abhängig von der Zuordnungsvorschrift deaktiviert wird.

3. Verfahren nach Anspruch 2,
**dadurch gekennzeichnet, dass**
eine Fahrfunktion zum automatischen oder teilweise automatischen Führen des Fahrzeugs oder eine Fahrerassistenzfunktion abhängig von dem zweiten Teil der Umfeldsensordaten ausgeführt wird.

4. Verfahren nach einem der Ansprüche 2 oder 3,
**dadurch gekennzeichnet, dass**
mittels des Fahrzeugs (2) eine Analysefahrt in der Parkinfrastruktur durchgeführt wird, wobei während der Analysefahrt mittels der Umfeldsensoreinrichtung (4a, 4b) weitere Umfeldsensordaten erzeugt werden und der erste Landmarkendetektionsalgorithmus sowie der zweite Landmarkendetektionsalgorithmus auf die weiteren Umfeldsensordaten angewendet werden, um die Zuordnungsvorschrift zu bestimmen; oder
- mittels eines weiteren Fahrzeugs eine Analysefahrt in der Parkinfrastruktur durchgeführt wird, wobei während der Analysefahrt mittels einer weiteren Umfeldsensoreinrichtung des weiteren Fahrzeugs weitere Umfeldsensordaten erzeugt werden und der erste Landmarkendetektionsalgorithmus sowie der zweite Landmarkendetektionsalgorithmus auf die weiteren Umfeldsensordaten angewendet werden, um die Zuordnungsvorschrift zu bestimmen.

5. Verfahren nach Anspruch 1,
**dadurch gekennzeichnet, dass**
- das erste Umfeldsensorsystem (4a, 4b) abhängig von der Zuordnungsvorschrift aktiviert wird und das zweite Umfeldsensorsystem (4a, 4b) abhängig von der Zuordnungsvorschrift deaktiviert wird; und
- die Umfeldsensordaten mittels des ersten Umfeldsensorsystems (4a, 4b) erzeugt werden.

6. Verfahren nach einem der vorhergehenden Ansprüche,
**dadurch gekennzeichnet, dass**
- das erste Umfeldsensorsystem (4a, 4b) als optisches Sensorsystem (4a) ausgebildet ist; und
- wenigstens eine Bodenmarkierungslinie oder wenigstens ein Schnittpunkt der wenigstens eine Bodenmarkierungslinie als die Landmarke (6a, 6b, 6c, 6d, 7, 7, 9a, 9d, 9c) detektiert wird.

7. Verfahren nach einem der Ansprüche 1 bis 5,
**dadurch gekennzeichnet, dass**
- das erste Umfeldsensorsystem (4a, 4b) als Radarsystem (4b) ausgebildet ist; und
- wenigstens eine Metallstruktur als die Landmarke (6a, 6b, 6c, 6d, 7, 7, 9a, 9d, 9c) detektiert wird oder eine Gebäudewand oder ein Teil der Gebäudewand als die Landmarke (6a, 6b, 6c, 6d, 7, 7, 9a, 9d, 9c) detektiert wird.

8. Verfahren nach einem der vorhergehenden Ansprüche,
**dadurch gekennzeichnet, dass**
- eine momentane Geschwindigkeit des Fahrzeugs (2) bestimmt wird;
- der erste Teil der Umfeldsensordaten abhängig von der momentanen Geschwindigkeit bestimmt wird.

9. Verfahren nach einem der vorhergehenden Ansprüche,
**dadurch gekennzeichnet, dass**
der erste Teil der Umfeldsensordaten abhängig von einer vorgegebenen Lokalisierungsgenauigkeit bestimmt wird.

10. Sensorvorrichtung (1) für ein Fahrzeug (2), die Sensorvorrichtung (1) aufweisend eine Umfeldsensoreinrichtung (4a, 4b), die dazu eingerichtet ist, Umfeldsensordaten zu erzeugen, die eine Umgebung des Fahrzeugs (2) darstellen, ein Speichermedium (5), das eine digitale Karte speichert, sowie ein Steuerungssystem (3), das dazu eingerichtet ist,
- eine erste Pose des Fahrzeugs (2) in einem Kartenkoordinatensystem der digitalen Karte zu bestimmen;
- basierend auf den Umfeldsensordaten eine Landmarke (6a, 6b, 6c, 6d, 7, 7, 9a, 9d, 9c) in der Umgebung zu detektieren und eine Position der Landmarke (6a, 6b, 6c, 6d, 7, 7, 9a, 9d, 9c) in dem Kartenkoordinatensystem zu bestimmen; und
- eine zweite Pose des Fahrzeugs (2) in dem Kartenkoordinatensystem abhängig von der Position der Landmarke (6a, 6b, 6c, 6d, 7, 7, 9a, 9d, 9c) zu bestimmen,
**dadurch gekennzeichnet, dass**
- die Umfeldsensoreinrichtung (4a, 4b) ein gemäß einem ersten Sensortyp ausgebildetes erstes Umfeldsensorsystem (4a, 4b) enthält, das dazu eingerichtet ist, einen ersten Teil der Umfeldsensordaten zu erzeugen;
- das Steuerungssystem (3) dazu eingerichtet ist, eine auf dem Speichermedium (5) gespeicherte Zuordnungsvorschrift zu lesen, welche der ersten Pose wenigstens einen bevorzugten Sensortyp oder wenigstens einen vorherrschenden Landmarkentyp zuordnet;
- das Steuerungssystem (3) dazu eingerichtet ist, abhängig von der Zuordnungsvorschrift zum Detektieren der Landmarke (6a, 6b, 6c, 6d, 7, 7, 9a, 9d, 9c) den ersten Teil der Umfeldsensordaten auszuwählen und einen ersten Landmarkendetektionsalgorithmus auf den ersten Teil der Umfeldsensordaten anzuwenden.
